# EUROPEAN PATENT APPLICATION

(11) **EP 4 576 652 A1**
(43) Date of publication of application: **25.06.2025**
(21) Application number: 23217756.8
(22) Date of filing: 18.12.2023
(51) Int. Cl.: H04L 9/08, H04L 9/32, H04L 9/40, H04L 9/14

(54) **A SYSTEM FOR SECURELY AND CENTRALLY STORING A DIGITAL KEY**

(71) Applicant: FlashX Security Solutions GmbH, 65207 Wiesbaden (DE)
(72) Inventor: Chalupa, Leon, 60118 Bad Vilbel (DE)
(74) Representative: WSL Patentanwälte Partnerschaft mbB

(57) **Abstract**

According to the present invention a system for securely and centrally storing a digital key is provided, wherein enhanced security is implemented by three primary features:
- A distributed security architecture, wherein of the three separate components of the system, i.e. the client application, the hardware security module and the gateway server, only the client application possesses access to the plaintext digital key.
- Encryption of the plaintext digital key at the client application using a pair of a private cryptographic key and a public key. This pair not only allows to encrypt the digital key such that only the client application, i.e. the legitimate user, can decrypt the encrypted digital key, but also allows authentication of the user's digital identity to the gateway server. The digital key wherever present outside the client is encrypted by the private cryptographic key. Only at the client the digital key is provided in decrypted form. More specifically, the digital key is present in its decrypted form only in the client application and during transfer to the respective protected application.
- The hardware security module is a highly specialized hardware component enabling storage of the password database at a very advanced hardware security level. This hardware security level is further enhanced by encryption and decryption of the digital key on the hardware security module using a database key.

## Description

The present invention relates to a system for securely and centrally storing a digital key required to protect a protected application.

In recent years, the number of passwords or more generally digital keys which have to be remembered by a single user in order to handle multiple user specific software applications and personal accounts has drastically increased. Even for an average user, the number of digital keys required is so high that the individual digital keys can only be remembered once either a single digital key is used multiple times or simple distinct digital keys are used. However, in both ways protection is rather insecure.

Therefore, password managers have become more and more popular in the past. A password manager is a computer program allowing users to store and manage their passwords for personal software applications and personal accounts relating to online services. Typically, password managers store passwords in an encrypted data base. In most password managers, the encrypted password database is stored in a local mass storage, in a network or in a cloud environment.

Recently, password managers have become available enabling a cloud service based on a centrally located server and multiple clients. However, these purely software-based client server architectures have shortcomings with respect to security during storage and exchange of the digital keys.

Consequently, it is an object of the present invention to provide a system for securely and centrally storing a digital key overcoming the deficiencies of the systems known from the prior art.

This object is solved by a system according to the independent claim of the present application. The system for securely and centrally storing a digital key comprises a client for each user, the client comprising the protected application and the client application, a hardware security module comprising a password data base for storing the plurality of digital keys, a data communication link between each the client application of the clients and the hardware security module, and a gateway server located in the data communication link between the client applications and the hardware security module.

The system according to the present invention provides enhanced security due to a combination of physical and software security layers.

The enhanced security of the system according to the present invention is provided by three primary features:
- A distributed security architecture, wherein of the three separate components of the system, i.e. the client application, the hardware security module and the gateway server, only the client application possesses access to the plaintext digital key.
- Encryption of the plaintext digital key at the client application using a pair of a private cryptographic key and a public key. This pair not only allows to encrypt the digital key such that only the client application, i.e. the legitimate user, can decrypt the encrypted digital key, but also allows authentication of the user's digital identity to the gateway server. The digital key wherever present outside the client is encrypted by the private cryptographic key. Only at the client the digital key is provided in decrypted form. More specifically, the digital key is present in its decrypted form only in the client application and during transfer to the respective protected application.
- The hardware security module is a highly specialized hardware component enabling storage of the password database at a very advanced hardware security level. This hardware security level is further enhanced by encryption and decryption of the digital key on the hardware security module using a database key.

The system according to the invention is further set up to carry out a number of processing steps during three phases of operation, namely an initialization phase, a storing phase and a retrieval phase. During the initialization phase, a pair of keys is generated and the public key is exchanged with the gateway server. During the storing phase, a new password is securely stored in the password database. Generation of a new password can either occur at a first use of the protected application or during replacement of an old digital key by a new digital key. During the retrieval phase, am encrypted digital key stored at the password database is transferred to the client application and is decrypted.

The system is set up such that in the initialization phase the client application generates a pair of a private cryptographic key and a public key, the client application transmits the public key to the gateway server or to the hardware security module, and the gateway server or the hardware security module stores the public key in a user database. This initial generation of a pair of keys and the exchange of the public key with the gateway server or the hardware security module enables end to end encryption of any digital keys to be stored by the client application and furthermore authentication of a user's digital identity to the gateway server or the hardware security module.

The public key is stored in a user database. In an embodiment this user database is implemented on the gateway server or on the hardware security module. Alternatively, the user database is implemented on an entity separate from the gateway server or the hardware security module. In an embodiment the user data base is implemented on a dedicated server separate from the gateway server and from the hardware security module. Separation of the gateway server and the hardware security module from the user database prevents that a hacker could replicate and imitate the gateway server and obtain access to the user database, which could then become a security risk if the private key is not secured.

In a further embodiment, the public key is stored together with information required to identify the digital identity of a user using the client application in the user database. This means that a real user's digital identity or profile is also identified and not just the client processing the key.

During the storing phase when the digital key required to secure the protected application shall be stored, the client application encrypts a digital key using the private cryptographic key to generate an encrypted digital key, the client application transmits the encrypted digital key and an identification of the protected application via the gateway server to the hardware security module. The hardware security module further encrypts the encrypted digital key received from the client application using a database key to obtain a database encrypted digital key. This database encrypted digital key is stored together with the identification of the protected application in the password database on the hardware security module.

Due to encryption of the digital key by means of a private cryptographic key at the client application, the user interacting with the client is the only entity which is able to decrypt the encrypted digital key as long as the private cryptographic key is not corrupted. The additional second encryption on the hardware security module using the database key leads to any brute force attack on the stored database encrypted digital key principally failing as long as the database key is not revealed to any attacker attempting to decipher the database encrypted digital keys stored in the password database.

In the retrieval phase, the protected application is called up and the client application transmits a password request including the identification of the protected application to the gateway server. The password request comprises a signature based on the private key. At least the gateway server or the hardware security module compares this signature of the password request and the public key stored in the user data base. This comparison in an embodiment is carried out by the gateway server and the hardware security module jointly. If the signature matches the public key, the gateway server sends a read request to the hardware security module, upon receipt of the read request the hardware security module reads the database encrypted digital key matching the identification, the hardware module decrypts the database encrypted digital key matching the identification using the database key to retrieve the encrypted key, the hardware security module transmits the encrypted digital key to the user application, the user application decrypts the encrypted digital key using the private key to retrieve the digital key and the user application enters the digital key into the protected application. Finally, the user application deletes the encrypted digital key and the digital key from the client.

The essential functionalities of the retrieval phase can be headlined authentication and decryption. The password request not only includes the identification of the protected application, but also a signature based on the private key. As the public key has been stored previously during the initialization phase in the user data base, a matching of the public key and the signature of the password request authenticates the user and guarantees that only the legitimate user can have access to the password requested.

Decryption of the encrypted digital key is twofold. Upon successful authentication to the gateway server the hardware security module decrypts the database encrypted digital key using the database key to retrieve the encrypted key. After transmission of the encrypted key via the gateway server to the client, the client application uses the private key to decrypt the encrypted digital key to retrieve the digital key.

The protected application is either a local application or a terminal server application which is protected by the digital key. An example of a local protected application or a terminal server protected application is an enterprise resource planning system protected by a password as the digital key.

Alternatively, the protected application is a personal account, e.g. of an online service. Typically, the login page of such a personal account is displayed in an internet browser. In an embodiment of the present invention, the protected application is a protected content presented in an internet browser.

In an embodiment, the client application is implemented as a browser extension or a local application. The term local application includes a terminal server application.

The term digital key denotes the plain text key protecting the protected application. In an embodiment, the digital key is a password. In a further embodiment, the digital key is selected from a group consisting of an encryption key (symmetric or asymmetric), a decryption key (symmetric or asymmetric), a session key, a root key, a master key, and a pre-shared key (PSK).

In an embodiment the digital key is a purpose session key encrypting a single communication session. In an embodiment the digital key is a temporary characteristic session key, preferably a temporary symmetric characteristic session key. In an embodiment the digital key is a use case session key used to securely transmit data during a specific session, like in an HTTPS connection.

In an embodiment the digital key is a purpose root key serving as the topmost key in a cryptographic scheme. In an embodiment the digital key is a characteristic root key underpinning the trust in a cryptographic system. In an embodiment the digital key is a use case session key used by certificate authorities within PKI systems.

In an embodiment the digital key is a purpose master key controlling access to a set of subordinate keys. In an embodiment the digital key is a characteristic master key used as a high-level key for managing a key hierarchy. In an embodiment the digital key is a use case master key typically used in enterprise-level encryption systems.

In an embodiment the digital key is a purpose pre-shared key used in symmetric encryption. In an embodiment the digital key is a characteristic pre-shared key shared in advance between the communicating parties. In an embodiment the digital key is a use case pre-shared key typically used in Wi-Fi networks and some VPN protocols.

The encrypted digital key is the digital key encrypted by the client application using the private cryptographic key. The database encrypted digital key is the encrypted digital key which has undergone a further encryption using the database key on the hardware security module.

The gateway server operates as a front end of the hardware security module towards the other entities of the system, in particular towards the client applications.

In an embodiment, the gateway server implements a real-time security monitoring and response. In an embodiment, the gateway server automatically blocks access to the password database once an unauthorized person as a user cannot verify themselves.

In an embodiment, the data communication link between the client applications on the clients and gateway server and optionally between the gateway server and the hardware security module is a TCP/IP data link.

In an embodiment, use of the private key at the client application requires a successful completion of an authentication of the user at the client.

In an embodiment of the present invention, in the retrieval phase the client application transmits the password request only upon successful completion of an authentication of the user at the client. In a further embodiment, in the storing phase the client application transmits the encrypted digital key and the identification only upon successful completion of the authentication of the user at the client.

Such an authentication of the user at the client in an embodiment relies on the local hardware used to operate the client. In an embodiment, authentication of the user at the client is carried out in a trusted execution environment on the client. In an embodiment, the trusted execution environment prevents any export of the private key to any further entity.

In an embodiment, authentication of the user at the client is carried out using a biometric feature, preferably in a trusted execution environment on the client. In an example, this biometric feature is the facial profile of the user as it is frequently used on mobile phones for authentication of a user. Advantageously, the trusted execution environment on the client provides that neither the stored template nor the detected biometric feature leaves the client.

In an embodiment, authentication of the user at the client is a multi-factor authentication (MFA), wherein preferably one of the factors is based on a biometric feature.

In a further embodiment, authentication of the user at the client is based on Passkey technology according to FIDO Alliance standards. The new FIDO 2 standard, for example, incorporates more external hardware in the form of end devices.

In an embodiment the factor or a plurality of factors for authentication is either defined by a use in a control application accessible by the user or in an administration application accessible by an administrator.

In an embodiment of the present invention, in a backup phase the client application transmits at least the private key to the hardware security module, the hardware security module encrypts the private key using a backup password and stores the private key on the hardware security module, wherein in a backup retrieval phase the hardware security module upon multi-factor authentication of the user decrypts the private key using the backup password and transmits the private key to the client application. In an embodiment transmission of at least the private key to the hardware security module is end to end encrypted using one of the encryption schemes of the prior art.

In a further embodiment of the present invention, in a backup phase the client application synchronizes at least the private key to further client applications on other clients, i.e. typically on other end devices, belonging the same digital identity, i.e. to the same user.

In an embodiment of the present invention, the system comprises a control application, wherein the plurality of digital keys stored on the hardware security module is manageable by the user through the control application.

In general, the system according to the present invention can be applied to a single digital key of a single user. However, it is evident that a plurality of digital keys can be stored for a single user and a plurality of digital keys can be stored for a plurality of users.

In an embodiment of the present invention, the system comprises a user account for each user and an administration application, wherein plurality of user accounts is configurable by an administrator through the administration application.

The administration application enabled access control to the administrator defining who can use which parts of the system. In a further embodiment the administration application the administration application allows to define security levels of the digital keys which are required to be fulfilled by user, i.e. key length, characters, etc.

In an embodiment of the present invention, the client application provides an automated URL recognition to generate the identification of the protected application and an automated password field recognition to enable automated entering of the digital key.

In a further embodiment, the client application provides an automated login field recognition to enter the user's login into the protected application.

In a further embodiment of the present invention, in the storing phase when the digital key required to secure the protected application has to be entered into the protected application for the first time or a new digital key has to be entered into the protected application replacing a previous digital key, the gateway server or the hardware security module generates a suggested digital key and transmits the suggested digital key to the client application.

Further advantages, features and possible applications of the present invention become apparent from the following description of an embodiment and the associated figures. In the figures, alike elements are demoted by identical reference numbers.
- Figure 1: is a schematic diagram of an embodiment of an architecture for a system ac-cording to the present invention.
- Figure 2: is schematic flow chart of an authentication process in the system of Figure 1.
- Figure 3: is a schematic flow chart of an encryption process in the system of Figure 1.

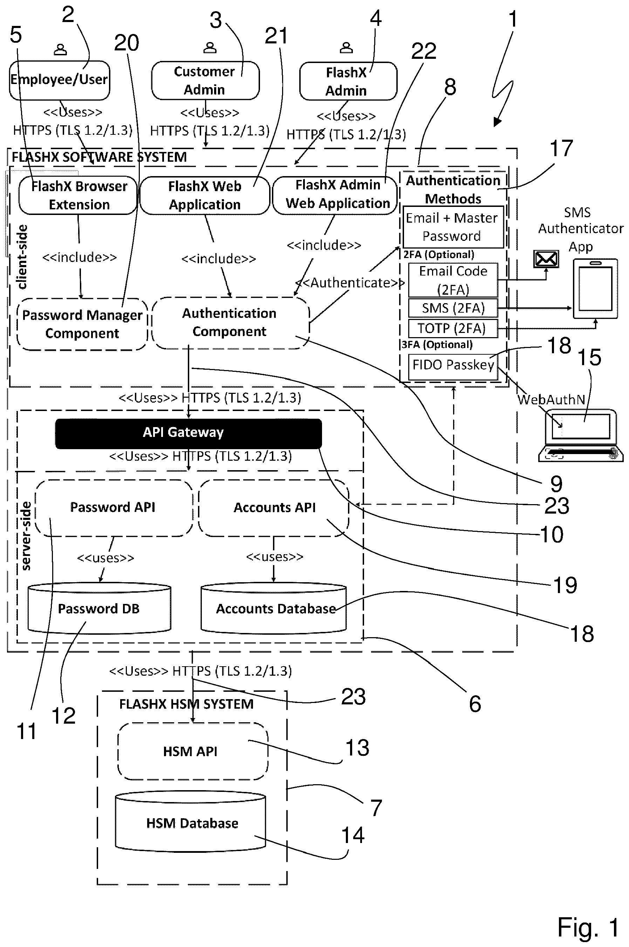

Figure 1 summarizes an architecture of a system 1 according to the present invention. The system 1 is available to three different types of peers, namely a plurality of users 2, e.g. employees of larger organization like a company or an NGO, a customer administrator 3 for each organization, and a central system administrator 4.

The system 1 consists of three major entities, a browser extension 5 as a client application in the sense of the present application, a gateway server 6 and a hardware security module 7 (HSM). The client 8 on which the browser extension 5 is implemented and the gateway server 6 as well as the gateway server 6 and the hardware security module 7 are connected by data communication links 22 implemented on the internet.

It is the major functionality of the system 1 to centrally store a number of digital keys in the form of passwords for a plurality of users 2 in the HSM 7. The system 1 to allows a cleartext version of the password only on client side 8 of the user 2. Wherever the password is handled elsewhere in the system 1 it is encrypted by a private key proprietary to the user 2. storage of the encrypted password only occurs the HSM 7. Immediately after use any clear text version of the password is deleted from the browser extension 5.

This combination of features allows to manage a plurality of passwords of a plurality of users, wherein each user belongs to one of a plurality of organizations, at an enhanced security level.

The system 1 can be used to store passwords enabling access to protected applications like an enterprise resource planning software as well as a digital user accounts accessible through a protected web page. For the sake of simplicity, it is assumed that for the described example a specific password is needed for the user 2 to access a digital content of a protected user account provided as a HTML page in the user's 2 internet browser. Whenever a new password is created this password shall be securely stored. The stored password is retrieved upon explicit request when the user 2 re-visits the respective login page.

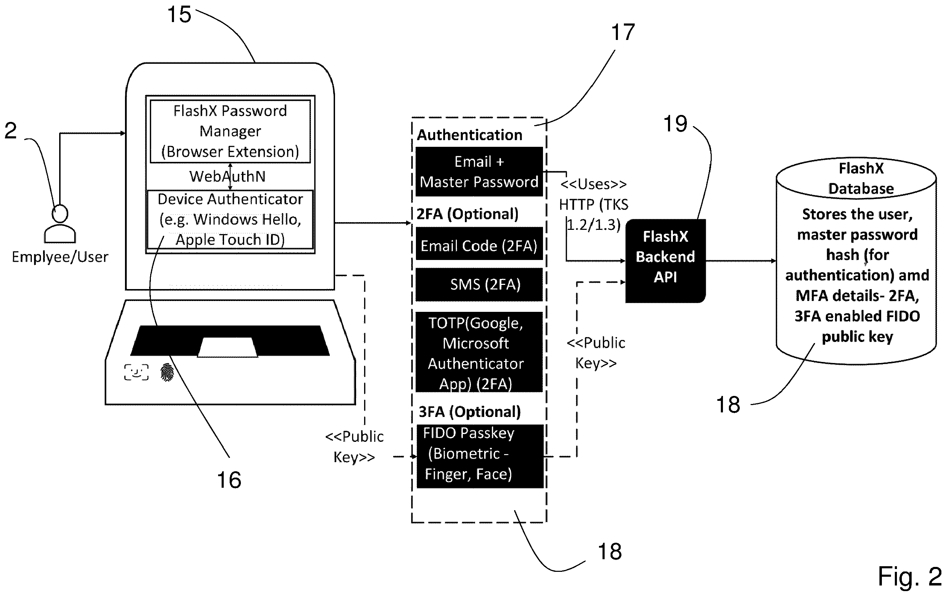

In order to be able to authenticate the user 2 the browser extension 5 includes an authentication module 9. The browser extension 5 is integrated on the client 8 of the user 2. The specific authentication process used in the present example is described later with reference to Figure 2.

In an initialization phase the browser extension generates a pair of a private cryptographic key and a public cryptographic key. The public cryptographic key is transferred the gateway server 6 where it is used during authentication of the user 2 or more specifically the user's browser extension 5 during the further processing steps for storing and retrieval of the password. The public cryptographic key is stored by the gateway server 6 in a user database implemented as part of the HSM database 14 on the HSM 7.

Upon first generation of a new password for the user account, the browser extension 5 encrypts the password using the private key to generate an encrypted password. The encrypted password together with an identification of the account namely the URL of the corresponding login page is then transferred to the gateway server 6.

At the gateway server 6 an API gateway 10 relays the password and the URL via a password API 11 to a password database 12. However, the password database 12 on the gateway server 6 only serves as a relay towards the HSM 7. A HSM API 13 running on the HSM 7 manages storage of the encrypted password at the HSM database 14.

In addition to encryption by the user's private key the HSM API 13 encrypts the encrypted password for a second time using at database key and AES 256 encryption to generate a database encrypted password.

Once the user re-visits the digital account and has to enter the password registered at the account the browser extension 5 automatically recognizes the URL of the login page as well as the login field and the password field. The browser extension 5 fills the login field with the user's user name and submits a password request to the gateway server 6. The password request contains an identification of the user account. The password request signed by the browser extension using the user's private key.

Received at the gateway server 6 authentication of the user is carried out in order to avoid misuse of the system 1. Authentication of the user at the gateway server side 6 is primarily based on a matching between the signature of the password request and the user's public key stored in the HSM database 14 on the HSM 7.

Once the authentication was successful the password request is further handed down through the password API 11, the password database 12 to the HSM 7. Upon receipt of the request at the HSM 7 the HSM retrieves the respective encrypted password from the HSM for which the URL of the password request matches the HSM database entry.

Then the HSM decrypts the database encrypted password using the database password in order to obtain the encrypted password (now only encrypted by the user's 2 private key). The encrypted password is then transmitted from the gateway server 6 to the user's client 9, namely to the browser extension 5. The browser extension 5 in turn decrypts the encrypted password using the user's private key.

In a next step the browser extension 5 enters the cleartext password into the password field of the respective login page. After the user 2 has obtained access to the user account, the cleartext password and the encrypted password is cleared and removed from the browser extension 5 as well as all other entities of the client 8.

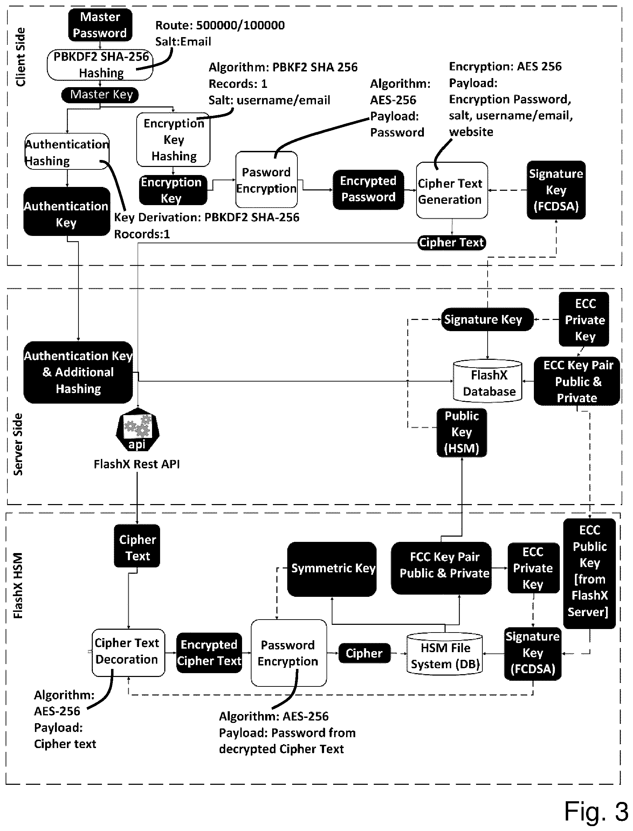

Figure 3 schematically describes an example of the encryption scheme provided to encrypt the cleartext password using the public key/private key pair to generate the encrypted password as well as to encrypt the encrypt the encrypted key using the database key to obtain the database encryption key.

Furthermore, the browser extension 5 includes a control application 20. The control application 20 is accessible by the user 2 to manage the user's 2 plurality of passwords stored on the HSM 7.

A customer administration application 21 is accessible by the customer administrator 3. The administration application 21 allows the customer administrator 3 to manage and administer the system's 1 user accounts, wherein each user 2 has a separate user account, is configurable by an administrator through the administration application. The administration application 21 to define which user 2 who can use which parts of the system 1. In the particular example the customer administrator 3 uses the administration application 21 to define the requirements for authentication in the authentication module 9, i.e. to select an authentication scheme 17 which is obligatory for all users 2.

Finally, the system comprises a centralized system administration application 22 allowing the system administrator 4 to manage the general settings of system 1 and to administer a plurality of organizations, each organization comprising a plurality of users 2 and a customer administrator 3.

The user's 2 private key is stored on the local hardware used to operate the client 8. In the present example the local hardware is a laptop computer 15 comprising a trusted execution environment in form of a Device authenticator 16 preventing any export of the private key to any further entity. Authentication is better understood with reference to Figure 2.

Use of the private key by the browser extension 5 in the storing phase as well as in the retrieval phase requires successful completion of an authentication of the user 2 through the authentication module 9 and based on an authentication scheme 17 selected by the customer administrator 3.

In the given example the authentication scheme 17 defined by the customer administrator 3 is a three-factor authentication 18. The three factors combined in order to authenticate the user 2 are the pair of cryptographic private and public keys, as well as a combination of fingerprint and face recognition according to the FIDO Alliance standard.

For the purposes of the original disclosure, it is pointed out that all features as they become apparent to a person skilled in the art from the present description, the drawings and the claims, even if they have been specifically described only in connection with certain further features, can be combined both individually and in any desired combinations with other of the features or groups of features disclosed herein, unless this has been expressly excluded or technical circumstances render such combinations impossible or pointless. A comprehensive, explicit description of all conceivable combinations of features is omitted here only for the sake of brevity and readability of the description.

While the invention has been illustrated and described in detail in the drawings and the foregoing description, this illustration and description are merely exemplary and are not intended to limit the scope of protection as defined by the claims. The invention is not limited to the embodiments disclosed.

Variations of the disclosed embodiments will be apparent to those skilled in the art from the drawings, description and appended claims. In the claims, the word "comprising" does not exclude other elements or steps, and the indefinite article "one" or "a" does not exclude a plurality. The mere fact that certain features are claimed in different claims does not exclude their combination. Reference signs in the claims are not intended to limit the scope of protection.

### List of reference numbers

- 1: System
- 2: User
- 3: Customer administrator
- 4: Central system administrator
- 5: Browser extension
- 6: Gateway server
- 7: Hardware security module
- 8: Client
- 9: Authentication module
- 10: API gateway
- 11: Password API
- 12: Password database
- 13: Hardware security module API
- 14: Hardware security module database
- 15: Laptop computer
- 16: Device authenticator
- 17: Authentication scheme
- 18: Three-factor authentication
- 20: Control application
- 21: Customer administration application
- 22: Centralized system administration application
- 23: Data communication link

## Claims

1. A system (1) for securely and centrally storing a digital key required to protect a protected application,
wherein the system (1) comprises
a client (8) for each user, the client (8) comprising the protected application and a client application (5),
a hardware security module (7) comprising a password database for storing the plurality of digital keys,
a data communication link (23) between the client applications of the clients and the hardware security module (7), and
a gateway server (6) located in the data communication link (23) between the client applications and the hardware security module (7);
wherein in an initialization phase
the client application (5) generates a pair comprising a private cryptographic key and a public key,
the client application (5) transmits the public key to the gateway server (6) or the hardware security module (7), and
the gateway server (6) or the hardware security module (7) stores the public key in a user database;
wherein in a storing phase when the digital key required to secure the protected application shall be stored:
the client application (5) encrypts a digital key using the private cryptographic key to generate an encrypted digital key,
the client application (5) transmits the encrypted digital key and an identification of the protected application via the gateway server (6) to the hardware security module (7),
the hardware security module (7) further encrypts the encrypted digital key received from the client application (5) using a database key to obtain a database encrypted digital key, and
the hardware security module (7) stores the database encrypted digital key and
the identification of the protected application in the password database; and
wherein in a retrieval phase when the protected application is called up:
the client application (5) transmits a password request including the identification of the protected application to the gateway server, wherein the password request comprises a signature based on the private key,
at least the gateway server (6) or the hardware security module (7) compares the signature of the password request and the public key stored in the user database,
if the signature matches the public key the gateway server (6) sends a read request to the hardware security module (7),
upon receipt of the read request the hardware security module (7) reads the database encrypted electronic key matching the identification,
the hardware module decrypts the database encrypted digital key matching the identification using the database key to retrieve the encrypted key,
the hardware security module (7) transmits the encrypted digital key to the user application,
the user application decrypts the encrypted digital key using the private key to retrieve the digital key,
the user application enters the digital key into the protected application, and
the user application deletes the encrypted digital key and the digital key from the client.

2. The system (1) according to the previous claim, wherein in the retrieval phase the client application (5) transmits the password request only upon successful completion of an authentication of a user at the client.

3. The system (1) according to any one of the previous claims, wherein in the storing phase the client application (5) transmits the encrypted digital key and the identification only upon successful completion of the authentication of the user at the client.

4. The system (1) according to any one of claims 2 and 3, wherein the authentication of the user at the client (8) is carried out using a biometric feature in a trusted execution environment on the client.

5. The system (1) according to any one of the previous claims, wherein in a backup phase the client application (5) transmits at least the private key to the hardware security module (7),
the hardware security module (7) encrypts the private key using a backup password and stores the private key on the hardware security module (7), and
wherein in a backup retrieval phase
the hardware security module (7) upon multi-factor authentication of the user decrypts the private key using the backup password and transmits the private key to the client application.

6. The system (1) according to any one of the previous claims, wherein the system (1) comprises a control application, wherein the plurality of digital keys stored on the hardware security module (7) is manageable by the user through the control application.

7. The system (1) according to any one of the previous claims, wherein the system (1) comprises a user account for each user and an administration application, wherein the plurality of user accounts is configurable by an administrator through the administration application.

8. The system (1) according to any one of the previous claims, wherein the client application (5) is a browser extension.

9. The system (1) according to any one of the previous claims, wherein the protected application is a protected content presented in a web browser.

10. The system (1) according to any one of the previous claims, wherein the client application (5) provides an automated URL recognition to generate the identification and an automated password field recognition to enter the digital key.

11. The system (1) according to any one of the previous claims, wherein in the storing phase when the digital key required to protect the protected application has to be entered into the protected application for the first time or a new digital key has to be entered into the protected application replacing a previous digital key, the gateway server (6) or the hardware security module (7) generates a suggested digital key and transmits the suggested digital key to the client application.
